# FASCICULE DE BREVET EUROPEEN

(11) **EP 2 957 385 B1**
(45) Date de publication et mention de la délivrance du brevet: **05.04.2017**
(21) Numéro de dépôt: 15172091.9
(22) Date de dépôt: 15.06.2015
(51) Int. Cl.: B23Q 17/09, B23B 29/04, H04B 1/034

(54) **SUPPORT D'OUTIL INSTRUMENTÉ ET PORTE-OUTIL ASSOCIÉ**
MIT INSTRUMENTEN AUSGESTATTETER WERKZEUGSCHAFT, UND ENTSPRECHENDER WERKZEUGHALTER
INSTRUMENTED TOOL SUPPORT AND ASSOCIATED TOOL HOLDER

(30) Priorité: 16.06.2014 FR 1455471
(43) Date de publication de la demande: 23.12.2015
(73) Titulaire: Centre Technique des Industries Mécaniques et du Décolletage, 74300 Cluses (FR)
(72) Inventeur: BUSI, Roger, 74800 Saint Laurent (FR); LAURENT, Patrice, 74250 Viuz en Sallaz (FR); JAYR, Cyril, 74800 Saint Sixt (FR)
(74) Mandataire: Croonenbroek, Thomas Jakob

(56) Documents cités:
- FR-A1- 2 922 130
- JP-A- S63 268 315

## Description

La présente invention concerne un support d'outil instrumenté tel qu'un porte-plaquette ou un porte d'outil, destiné à être monté dans une machine-outil et apte à recevoir une plaquette de coupe pour l'usinage d'une pièce.

L'augmentation de la productivité, les contraintes de qualité de l'usinage liées par exemple, à l'état de surface des pièces usinées, ainsi que l'évolution des matériaux des pièces à usiner, nécessitent la constante évolution des procédés d'usinage. Afin d'atteindre les nouveaux critères de performances requis, des procédés d'usinage visant à optimiser les conditions de coupe ont été développés. Ainsi, on connaît le concept industriel de couple outil - matière (COM) défini par la norme NFE 66-520 pour la sélection des paramètres d'entrée de coupe tels que l'avance, la profondeur de coupe, la largeur de passe ou la vitesse de coupe des outils dans la matière à usiner. Cette norme préconise que les conditions d'usinage sont propres à un couple outil - matière usinée, au lubrifiant utilisé, et qu'une étude de l'évolution de paramètres de sortie de coupe, tels que les vibrations, la température des outils, la forme des copeaux, les efforts de coupe ou la puissance consommée par la broche de la machine-outil, permet la détermination d'un domaine d'emploi optimal en termes de plages d'avances et de vitesses de coupe des outils dans la matière à usiner. On s'intéresse donc plus précisément à l'instrumentation des machines-outils pour la surveillance des paramètres de sortie de coupe, via la mesure de paramètres représentatifs d'une action de coupe.

On connaît déjà du document FR 2 922 131 ou FR 2 922 129 au nom de la Demanderesse des outils instrumentés de capteurs pour la mesure en cours d'usinage, de paramètres représentatifs d'une action de coupe.

Toutefois, lorsque les outils sont montés dans les porte-outils, ceux-ci ne sont pas toujours faciles à instrumenter et à mettre en oeuvre à cause des connections électriques du capteur, et notamment pour le remplacement d'un capteur défaillant, surtout si les porte-outils sont montés dans une tourelle rotative ou une broche.

Pour pallier à cet inconvénient, la Demanderesse a proposé dans le document FR 2 922 130 un porte-outil équipé de moyens de transmission sans fil afin de s'affranchir de câbles courant le long de la machine-outil.

Dans ce cas, il faut prévoir un boitier contenant par exemple une alimentation autonome sous forme d'une batterie par exemple rechargeable, un circuit imprimé avec divers composants notamment pour le traitement ou prétraitement de signaux venant d'un ou de plusieurs capteurs et pour la transmission sans fil des données vers un récepteur associé.

Un tel boîtier est généralement installé sur la machine-outil et soumis à de nombreuses contraintes environnementales, notamment des poussières, de l'huile et des vibrations.

De plus, il avait été prévu d'installer la batterie sur la carte de circuit imprimé pour une plus grande compacité.

Cependant, si la batterie présente sur la carte à circuit imprimé un certain jeu dans son logement, à force des vibrations auxquelles elle est soumise, les connexions électriques s'altèrent et il peut y avoir des défaillances.

En outre, étant donné que la masse de batterie est importante par rapport à la masse de la carte à circuit imprimé, les vibrations répétées soumettent la carte à circuit imprimé mécaniquement sous rude épreuve pouvant conduire à la casse de certains éléments et/ ou pistes de connexion et à des fléchissements importants. Ceci est donc source de défaillances potentielles à long terme qu'il convient d'éviter.

Pour pallier au moins partiellement aux inconvénients précités, l'invention vise à proposer un support d'outil avec un boîtier d'alimentation et de traitement amélioré.

A cet effet, l'invention a pour objet un support d'outil tel que défini dans la revendication 1.

La batterie est donc éloignée du circuit imprimé de sorte à isoler mécaniquement la batterie du circuit imprimé afin qu'il n'y ait pas d'interactions mécaniques entre ces deux éléments du fait des vibrations que subit le boîtier. Le boitier de servitude est ainsi plus robuste et mieux adapté aux conditions environnementales auxquelles il est exposé, en particulier en termes de vibrations.

Le support d'outil selon l'invention peut en outre présenter un ou plusieurs des aspects suivants, pris seul ou en combinaison.

Le support d'outil peut comporter en outre un joint interposé entre le couvercle et le fond.

Selon un aspect, la batterie est maintenue contre la face interne du couvercle par un élément de fixation.

Cet élément de fixation comprend par exemple une barre fixée contre la face interne du couvercle et prenant la batterie en sandwich entre le couvercle et la barre.

Selon un autre aspect, le support d'outil comporte un matériau élastique interposé entre l'élément de fixation et la batterie d'une part et entre la batterie et la face interne du couvercle d'autre part.

Le matériau élastique est par exemple une mousse ou un composé siliconé.

Selon encore un autre aspect, des blocs sont disposés sur le fond du boîtier, sur lesquels est montée la carte à circuit imprimé.

Le support d'outil est par exemple formé par un porte-plaquette destiné à être monté dans un porte-outil d'une machine-outil et apte à recevoir la plaquette de coupe.

L'invention a également pour objet un porte-outil destiné à être monté sur une machine-outil, caractérisé en ce qu'il comporte un support d'outil tel que précédemment décrit, le support d'outil comportant une plaquette de coupe.

D'autres avantages et caractéristiques apparaîtront à la lecture de la description de l'invention, ainsi que des dessins annexés sur lesquels :
- La figure 1 montre une vue schématique en perspective d'un porte-outil selon l'invention, destiné à être monté sur une machine-outil (non représentée), telle qu'un tour de décolletage ou un centre d'usinage,
- La figure 2 montre une vue schématique en perspective éclatée d'un boitier de servitude,
- La figure 3 montre le boitier de la figure 2 à l'état ouvert,
- La figure 4 montre le boitier des figures 2 et 3 selon une vue en coupe transversale IV-IV à l'état fermé,
- La figure 5 montre le boitier des figures 2 et 3 selon une vue en coupe longitudinale V-V à l'état fermé,

Sur les figures, les éléments identiques sont identifiés par les mêmes références.

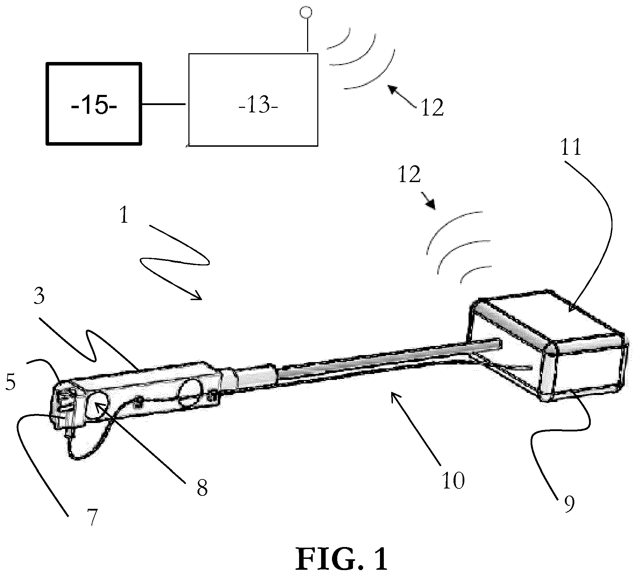

La figure 1 illustre un porte-outil 1 destiné à être monté sur une machine-outil (non représentée), telle qu'un tour de décolletage ou un centre d'usinage.

Le porte-outil 1 comporte un porte-plaquette 3 interchangeable, apte à recevoir une plaquette de coupe 5 pour l'usinage d'une pièce.

Le porte-plaquette 3 permet de changer aisément la plaquette coupante 5 lorsque celle-ci est usée ou inadaptée sans avoir à changer l'ensemble porte-outil 1 au complet.

La plaquette de coupe 5, présentant dans cet exemple une forme rhombique, est de préférence en matériau fritté (carbure ou céramique).

La plaquette 5 est portée et maintenue fixée au porte-plaquette 3 correspondant par un montage amovible classique.

On désigne le porte-plaquette 3 ou le porte-outil 1 comme le support d'outil.

On comprend donc que le support d'outil est formé par un porte-plaquette 3 destiné à être monté dans un porte-outil d'une machine-outil et apte à recevoir la plaquette de coupe 5.

Le support d'outil 3 comporte de plus un ou plusieurs capteurs 7 apte à déterminer un ou plusieurs paramètres représentatifs d'une action de coupe entre une pièce à usiner et une plaquette de coupe 5.

Comme exemple de capteurs 7, on peut citer par exemple une jauge de contrainte, un capteur de mesure vibratoire, un capteur de température, un accéléromètre etc.

Ces capteurs peuvent être apposés contre le support d'outil 3 ou alors être intégrés dans un logement 8 prévu à cet effet à l'intérieur du support d'outil 3, proche de la plaquette de coupe 5.

Le ou les capteurs 7 sont reliés électriquement par des câbles 10 à un boîtier 9 de servitude qui est destiné à être fixé sur la machine-outil (non représentée), par exemple sur une tourelle.

Le boîtier de servitude 9 renferme une unité de transmission radio 11 configurée pour communiquer par ondes radio 12 avec un émetteur/récepteur 13 disposé à distance de la machine-outil et relié à une unité de traitement distant 15, par exemple un ordinateur, servant à exploiter les paramètres mesurés par les capteurs 7.

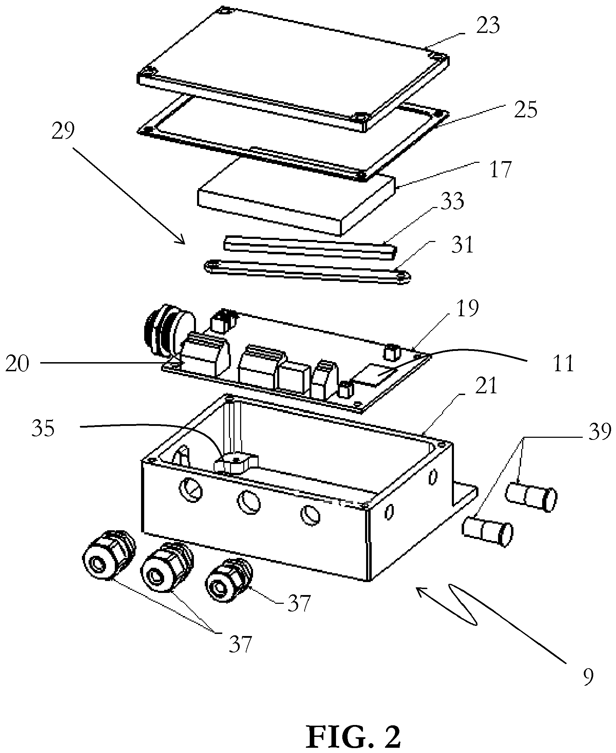

On se réfère maintenant aux figures 2 à 5 montrant le boîtier de servitude 9 en détail.

Le boitier de servitude 9 comporte une batterie 17 de préférence rechargeable et un circuit imprimé 19 alimenté en courant par ladite batterie 17 (la connexion électrique, par exemple par des câbles électriques entre la batterie 17 et le circuit imprimé 19, n'est pas représentée sur les figures).

Le circuit imprimé 19 porte divers composants électriques et électroniques comme par exemple une unité 20 de traitement ou de prétraitement des signaux en provenance des capteurs 7 par exemple avec des processeurs, au moins en partie l'unité de transmission radio 11 avec par exemple une antenne 11A d'émission et de réception.

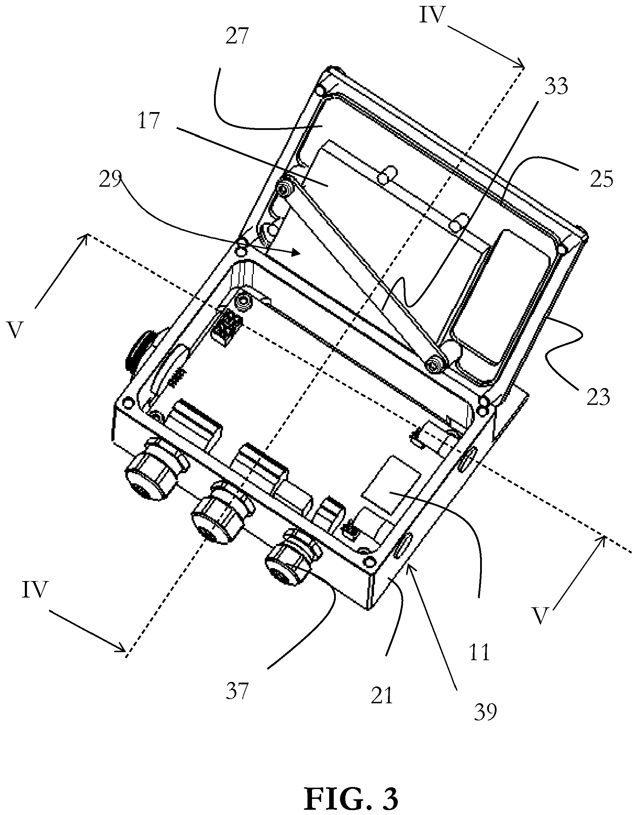

Comme visible sur la figure 3, le boîtier 9 est formé d'un fond 21 et d'un couvercle 23 séparables l'un de l'autre.

La batterie 17 est portée par le couvercle 23 et le circuit imprimé par le fond 21.

Ainsi, la batterie 17 est éloignée du circuit imprimé 19 de sorte à isoler mécaniquement la batterie 17 du circuit imprimé 19 afin qu'il n'y ait pas d'interactions mécaniques entre ces deux éléments du fait des vibrations que subit le boîtier 9.

Bien entendu, selon une variante non représentée, on peut prévoir que la batterie 17 est portée par le fond 21 et le circuit imprimé par le couvercle 2 3 sans sortir du cadre de la présente invention.

Cette isolation mécanique entre la batterie 17 et le circuit imprimé 19 est renforcée par un joint d'étanchéité interposé 25 entre le couvercle 23 et le fond 21. Ce joint d'étanchéité possède à la fois la fonction d'empêcher l'entrée de tout liquide comme de l'huile, ou des poussières, mais forme aussi un élément d'amortissement entre le couvercle 23 et le fond 21.

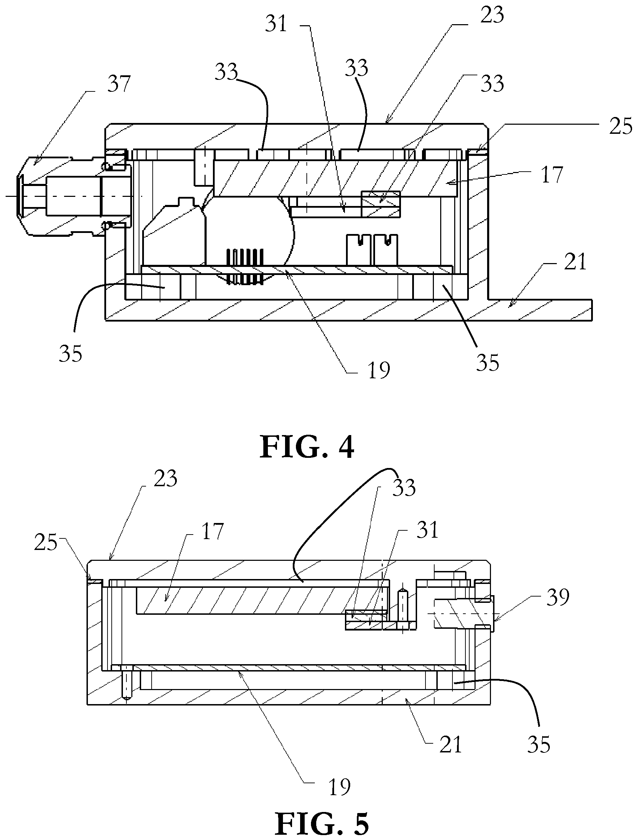

Comme on le voit bien sur les figures 4 à 6, la batterie 17 est maintenue contre la face interne 27 du couvercle 23 par un élément de fixation 29 comme par exemple une barre 31 fixée par vissage contre la face interne 27 du couvercle 23 et prenant la batterie 17 en sandwich entre le couvercle 23 et la barre 31.

Pour affaiblir davantage les vibrations au niveau de la batterie 17 un matériau élastique 33 est interposé entre l'élément de fixation 29 et la batterie 17 d'une part et entre la batterie 17 et la face interne 27 du couvercle 23 d'autre part.

Le matériau élastique 33 est par exemple une mousse ou un composé siliconé sous forme de bande collée d'une part sur la face interne 27 du couvercle 23 et d'autre part sur la barre de fixation 31.

Comme visible sur les figures 2, 4 et 5, le fond 21 présente dans chaque coin un bloc 35 permettant un positionnement précis de la carte à circuit imprimé tout en la maintenant éloignée du fond.

Par ailleurs, des presse-étoupes 37 permettent le passage étanche des câbles venant des capteurs 9 à l'intérieur du boîtier.

Des voyants 39 reliés à la carte à circuit imprimé 19 permettent d'indiquer à un opérateur l'état fonctionnement du boîtier 9.

On comprend donc que la batterie 17 et le circuit imprimé 19 sont séparés mécaniquement de façon à prévenir toute interaction néfaste due aux vibrations, ce qui allonge la fiabilité du circuit imprimé 19 et la durée de vie la batterie 17.

## Revendications

1. Support d'outil (1) d'une machine-outil apte à recevoir une plaquette de coupe (5) pour l'usinage d'une pièce, comportant d'une part, au moins un capteur (7) apte à déterminer un paramètre représentatif d'une action de coupe entre une pièce à usiner et une plaquette de coupe (5) et d'autre part, un boitier de servitude (9) relié électriquement au capteur (7) et comportant une batterie (17) et un circuit imprimé (19) alimenté en courant par ladite batterie (17), ledit circuit imprimé (19) portant au moins en partie une unité de transmission radio (11), le support d'outil étant **caractérisé en ce que** le boîtier (9) est formé d'un fond (21) et d'un couvercle (23) séparables, et **en ce que** la batterie (17) est portée par le couvercle (23) et le circuit imprimé (19) par le fond (21) ou vice versa.

2. Support d'outil selon la revendication 1, **caractérisé en ce qu'**il comporte en outre un joint (25) interposé entre le couvercle (23) et le fond (21).

3. Support d'outil selon la revendication 1 ou 2, **caractérisé en ce que** la batterie (17) est maintenue contre la face interne (27) du couvercle (23) par un élément de fixation (29).

4. Support d'outil selon la revendication 3, **caractérisé en ce que** l'élément de fixation (29) comprend une barre (31) fixée contre la face interne (27) du couvercle (23) et prenant la batterie (17) en sandwich entre le couvercle (23) et la barre (31).

5. Support d'outil selon la revendication 3 ou 4, **caractérisé en ce qu'**il comporte un matériau élastique (33) interposé entre l'élément de fixation (29) et la batterie (17) d'une part et entre la batterie (17) et la face interne (27) du couvercle (23) d'autre part.

6. Support d'outil selon la revendication 5, **caractérisé en ce que** le matériau élastique (33) est une mousse ou un composé siliconé.

7. Support d'outil selon l'une quelconque des revendications 1 à 6, **caractérisé en ce qu'**il comporte des blocs (35) disposés sur le fond (21) du boîtier (9) et sur lesquels est montée la carte à circuit imprimé (19).

8. Support d'outil selon l'une quelconque des revendications 1 à 7, **caractérisé en ce qu'**il est formé par un porte-plaquette destiné à être monté dans un porte-outil d'une machine-outil et apte à recevoir la plaquette de coupe (5).

9. Porte-outil destiné à être monté sur une machine-outil, **caractérisé en ce qu'**il comporte un support d'outil (1) selon la revendication 8, le support d'outil comportant une plaquette de coupe (5).

## Patentansprüche

1. Werkzeugschaft (1) einer Werkzeugmaschine, der geeignet ist, eine Schneidplatte (5) für das Bearbeiten eines Werkstücks aufzunehmen, umfassend einerseits mindestens einen Sensor (7), der geeignet ist, einen Parameter zu bestimmen, der für einen Schneidvorgang zwischen einem zu bearbeitenden Werkstück und einer Schneidplatte (5) repräsentativ ist, und andererseits ein Steuerungsgehäuse (9), das elektrisch mit dem Sensor (7) verbunden ist und eine Batterie (17) und eine Leiterplatte (19) aufweist, die von der Batterie (17) mit Strom versorgt wird, wobei die Leiterplatte (19) mindestens teilweise eine Funkübertragungseinheit (11) trägt, wobei der Werkzeugschaft **dadurch gekennzeichnet ist, dass** das Gehäuse (9) aus einem Boden (21) und einem Deckel (23) gebildet ist, die trennbar sind, und dass die Batterie (17) von dem Deckel (23) und die Leiterplatte (19) von dem Boden (21) getragen ist oder umgekehrt.

2. Werkzeugschaft nach Anspruch 1, **dadurch gekennzeichnet, dass** er ferner eine Dichtung (25) aufweist, die zwischen dem Deckel (23) und dem Boden (21) angeordnet ist.

3. Werkzeugschaft nach Anspruch 1 oder 2, **dadurch gekennzeichnet, dass** die Batterie (17) durch ein Befestigungselement (29) gegen die Innenseite (27) des Deckels (23) gehalten wird.

4. Werkzeugschaft nach Anspruch 3, **dadurch gekennzeichnet, dass** das Befestigungselement (29) eine Stange (31) aufweist, die gegen die Innenseite (27) des Deckels (23) befestigt ist und die die Batterie (17) sandwichartig zwischen dem Deckel (23) und der Stange (31) aufnimmt.

5. Werkzeugschaft nach Anspruch 3 oder 4, **dadurch gekennzeichnet, dass** er ein elastisches Material (33) aufweist, das zwischen dem Befestigungselement (29) und der Batterie (17) einerseits und zwischen der Batterie (17) und der Innenseite (27) des Deckels (23) andererseits angeordnet ist.

6. Werkzeugschaft nach Anspruch 5, **dadurch gekennzeichnet, dass** das elastische Material (33) ein Schaum oder eine Silikonverbindung ist.

7. Werkzeugschaft nach einem der Ansprüche 1 bis 6, **dadurch gekennzeichnet, dass** er Blöcke (35) aufweist, die auf dem Boden (21) des Gehäuses (9) angeordnet sind und auf denen die Leiterplatte (19) befestigt ist.

8. Werkzeugschaft nach einem der Ansprüche 1 bis 7, **dadurch gekennzeichnet, dass** er durch einen Plattenhalter gebildet ist, der dazu bestimmt ist, in einem Werkzeughalter einer Werkzeugmaschine befestigt zu werden und geeignet ist, die Schneidplatte (5) aufzunehmen.

9. Werkzeughalter, der dazu bestimmt ist, auf einer Werkzeugmaschine befestigt zu werden, **dadurch gekennzeichnet, dass** er einen Werkzeugschaft (1) nach Anspruch 8 aufweist, wobei der Werkzeugschaft eine Schneidplatte (5) aufweist.

## Claims

1. Tool post (1) of a machine tool suitable for receiving a cutting insert (5) for the machining of a workpiece, including, firstly, at least one sensor (7) suitable for determining a parameter representing a cutting action between a workpiece to be machined and a cutting insert (5) and, secondly, a service case (9) electrically connected to the sensor (7) and including a battery (17) and a printed circuit (19) supplied with current by said battery (17), said printed circuit (19) bearing, at least in part, a radio transmission unit (11), **characterized in that** the tool post being the case (9) is formed from a bottom (21) and from a cover (23) which can be separated, and **in that** the battery (17) is borne by the cover (23) and the printed circuit (19) by the bottom (21), or vice versa.

2. Tool post according to Claim 1, **characterized in that** it further includes a joint (25) inserted between the cover (23) and the bottom (21).

3. Tool post according to Claim 1 or 2, **characterized in that** the battery (17) is held against the internal face (27) of the cover (23) by a fixing element (29).

4. Tool post according to Claim 3, **characterized in that** the fixing element (29) comprises a bar (31) fixed against the internal face (27) of the cover (23) and sandwiching the battery (17) between the cover (23) and the bar (31).

5. Tool post according to Claim 3 or 4, **characterized in that** it includes an elastic material (33) inserted between the fixing element (29) and the battery (17), firstly, and between the battery (17) and the internal face (27) of the cover (23), secondly.

6. Tool post according to Claim 5, **characterized in that** the elastic material (33) is a foam or a silicone compound.

7. Tool post according to any one of Claims 1 to 6, **characterized in that** it includes blocks (35) arranged on the bottom (21) of the case (9) and on which the printed circuit board (19) is mounted.

8. Tool post according to any one of Claims 1 to 7, **characterized in that** it is formed by an insert holder intended to be mounted in a tool holder of a machine tool and suitable for receiving the cutting insert (5).

9. Tool holder intended to be mounted on a machine tool, **characterized in that** it includes a tool post (1) according to Claim 8, the tool post including a cutting insert (5).
